# EUROPEAN PATENT APPLICATION

(11) **EP 4 340 154 A1**
(43) Date of publication of application: **20.03.2024**
(21) Application number: 22196017.2
(22) Date of filing: 16.09.2022
(51) Int. Cl.: H02J 3/14, H02J 3/32, H02J 7/00, H02J 7/34

(54) **ENERGY MANAGEMENT SYSTEM AND METHOD**

(71) Applicant: Siemens Schweiz AG, 8047 Zürich (CH)
(72) Inventor: Azari, Nazanin, 8038 Zuerich (CH); Cadirvelou, Parandaman, 91540 Ormoy (FR); Cattaneo, Diego, 8134 Adliswil (CH); Heinisch, Alexander, 2124 Kreuzstetten (AT); Kömpf, Tim Lukas, 63150 Heusenstamm (DE); Schmutz, Hanspeter, 8048 Zürich (CH); Schütz, Thomas, 90765 Fürth (DE); Stoffel, Martin, 8964 Rudolfstetten (CH); Thiem, Sebastian, 91413 Neustadt an der Aisch (DE)
(74) Representative: Siemens Patent Attorneys

(57) **Abstract**

An energy management system for a building having power consumption devices, power generation devices and power storage devices, said system comprising: a monitoring unit, which is configured to acquire information about the power generated by the power generation devices, about the power consumed by the power consumption devices and about the state of charge of the power storage devices; a management unit, which is configured to derive information about a flexibility of the power demand of the power consumption devices deployed in the building based on the information acquired by the monitoring unit; and an optimization unit, which is configured to optimize the power allocation of the power produced by the power generation devices to the power consumption devices and/or to the power storage devices depending on the derived flexibility information of the power demand.

## Description

The present invention relates to an energy management system and method for buildings. In particular, it relates to energy management systems where demand-side flexibility has been unlocked.

The energy sector is evolving into a model where decarbonisation is one of the prime goals. This is implemented mostly through an increase in electrification and a higher presence of renewable energy sources.

This transformation of the energy sector brings along at least two important issues. First, the increase of renewable energies as sources of energy production introduces an element of variability in the grid, which has to be compensated for in order to keep the required standards of reliability of the service. Second, the increasing electrification can lead to increases in the power demand, which again have to be mitigated in order for the grid to avoid peak loads as much as possible.

The need for supply-side flexibility has been long recognized and implemented, but it has to be supported more and more with demand-side flexibility. Demand-side flexibility is defined as the portion of the demand that can either be modified (increased or decreased) or shifted. Demand-side flexibility measures have been traditionally articulated through demand response programs, which involve curtailments or load shedding during peak load times.

Energy management systems on the demand side, or demand-side energy management systems implement information and communication technologies in order to monitor an energy system (e.g. a building), model their different energy assets and optimize their energy usage. Demand side energy management systems are useful for managing the energy resources within demand response programs, but they can also be used in a broader sense.

The optimization process carried out by conventional energy management systems takes into account the supply-side resources as well as the storage assets of the energy system. Additionally, in most of the cases, actions to be taken on the demand side are limited to the curtailment or load shedding during peak demand times.

It is an object of the present invention to provide an improved energy management system for buildings, where the energy resources of the building are efficiently used by involving the demand-side flexibility into the optimization process.

The object of the present invention can be achieved by an energy management system having the features of claim 1 and by an energy management method having the features as detailed in claim 14. Preferred embodiments of the invention with advantageous features are defined in the dependent claims.

A first aspect of the invention provides an energy management system for a building having power consumption devices, power generation devices and power storage devices, said system comprising: a monitoring unit, which is configured to acquire information about power generated by the power generation devices, about power consumed by the power consumption devices and about the state of charge of the power storage devices; a management unit, which is configured to derive information about a flexibility of the power demand of the power consumption devices deployed in the building based on the information acquired by the monitoring unit; and an optimization unit, which is configured to optimize the power allocation of the power produced by the power generation devices to the power consumption devices and/or to the power storage devices depending on the derived flexibility information of the power demand.

A building will be henceforth understood broadly as an energy system, belonging either to the industrial, commercial or residential sectors, that has an energy demand and a number of resources or assets with which it is able to generate and store energy.

The building contains a number of energy loads that consume energy. The required energy can be supplied to the building as electrical energy by a public or by a local power supply grid and/or can be provided through heat pumps or combined heat and power (CHP) devices and/or can come from onsite power generation (e.g. from solar panels) at the site of the building and/or also from a number of storage assets (e.g. batteries, thermal energy storages) deployed at the site of the respective building. Here and in the following, when it is referred to energy generation, onsite energy generation as well as the energy supplied by the grid is considered.

The flexibility of the power demand, i.e. the demand-side flexibility, may be defined as the admissible increase or admissible decrease of the power demand that can be performed, e.g. in a specific building through the management of its loads or power-consuming devices. For example, if a certain task or energy consuming operation inside the building can be shifted to a later time, this adds to the demand-side flexibility of the building. Heating, ventilation and air conditioning (HVAC) systems and air-handling units are examples of loads or power-consuming systems which provide demand-side flexibility.

The monitoring unit used in the energy management system is an information and communication technology device capable of acquiring data and delivering it for further processing. The monitoring unit can be connected to a set of sensor units of different kinds, and it is configured to acquire information ,i.e. data, about the consumption of the loads deployed at the site of the building, the state of charge (SoC) of the storage assets and the amount of energy produced locally at the site of the building (e.g. by a photovoltaic installation) or by the grid. The monitoring unit may be realized in hardware and/or software, cable-bound and/or wireless, and in any combination thereof. It can comprise an interface to an intranet or to the Internet, to a cloud computing service, to a remote server and/or the like.

The management unit and optimization unit as used in the energy management system are broadly understood as entities able to process information. Each of them may therefore contain, at least, a central processing unit, CPU, and/or at least one graphics processing unit, GPU, and/or at least one field-programmable gate array, FPGA, and/or at least one application-specific integrated circuit, ASIC and/or any combination of the foregoing. Each of them may further comprise a working memory operatively connected to the at least one CPU and/or a non-transitory memory operatively connected to the at least one CPU and/or the working memory. Each of them may be configured to implement software or applications to execute programs. Each of them may be implemented partially and/or completely in a local apparatus (e.g. a cell phone or another portable user equipment) and/or partially and/or completely in a remote system such as a cloud computing platform. They may be realized in hardware and/or software, cable-bound and/or wireless, and in any combination thereof. Each of them may comprise an interface to an intranet or the Internet, to a cloud computing service, to a remote server and/or the like.

A second aspect of the present invention provides a computer-implemented energy management method for a building, comprising the following steps: (a) acquiring information about the power generated by the power generation devices, about the power consumed by the power consumption devices and about the state of charge of the power storage devices; (b) deriving, based on the acquired information, information about a flexibility of the power demand of the power consumption devices deployed in the building; and (c) optimizing the power allocation of the power produced by the power generation devices to the power consumption devices and/or to the power storage devices depending on the derived flexibility information of the power demand.

In particular, the method according to the second aspect of the invention may be carried out by the system according to the first aspect of the invention. The features and advantages disclosed herein in connection with the energy management system are therefore also disclosed for the method, and vice versa.

According to a third aspect, the invention provides a computer program product comprising executable program code configured to, when executed, perform the method according to the second aspect of the present invention.

According to a fourth aspect, the invention provides a non-transient computer-readable data storage medium comprising executable program code configured to, when executed, perform the method according to the second aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to the second aspect of the present invention.

One of the main ideas underlying the present invention is to provide an energy management system that incorporates demand-side flexibility into the energy strategy planning of a building. Information about the power generation, power consumption and state of charge of the storage assets of the building is gathered by a monitoring device through a number of sensors located at different points in the building, i.e. within the closed inner space of the building but also at other points at the site of the building, e.g. at the roof of the building. This information is processed by a management unit, which is adapted to determine the demand-side flexibility of the building at any point in time. An optimization unit is adapted to use the demand-side flexibility to determine an optimized use of the energy of the building by allocating the power produced by the power generation devices to the power consumption devices and/or to the power storage devices.

In other words, the optimization unit of the energy management system determines when to optimally use the demand-side flexibility, e.g. in periods where the onsite generation of energy is low, such as at times where cloudy skies are forecasted and generation of solar power by the local power generation devices of the building is diminished.

The system as described above allows a simple implementation of a computer-implemented energy management method. In a first step, information about the power status of the building (power consumption, power generation and state of charge SoC of the energy storage devices) is collected. In a further step, this information is processed to generate information about the demand-side flexibility of the building over time. The information about the demand-side flexibility is then subsequently used to find an optimal allocation of the energy resources of the building.

An advantage of the present invention is that it determines and exploits the demand-side flexibility of a building to generate an optimized use of the energy assets of the building. This leads in particular to a more efficient energy management of the building, without neither interfering with the normal operations of the building nor generating discomfort for its occupants.

Another advantage of the present invention is that, by unfolding and using the demand-side flexibility, a high level of renewable energy resources in the building can be allocated, with the corresponding benefits towards decarbonization.

A further advantage of the present invention is that the energy management system gets updated with a high frequency, which on the one hand leads to a reduction of peak loads, and on the other hand helps counter the effects of unexpected events, e.g. sudden changes in the energy supply from the power supply grid or sudden changes in the meteorological conditions in the local environment of the building.

Advantageous embodiments and further developments follow from the dependent claims as well as from the description of the different preferred embodiments illustrated in the accompanying figures.

According to some of the embodiments, refinements, or variants of embodiments, the optimization unit of the energy management system is further configured to send request signals to the management unit, wherein the request signals are based on the optimized power allocation. In other words, the management unit of the energy management system can process the information generated by the optimization unit and can form signals provided to request changes in the energy settings of the building. In some of the preferred embodiments, the energy settings of the building can be modified periodically, e.g. every minute, which increases the resilience of the energy management system of the invention against unexpected and sudden changes.

According to some of the embodiments, refinements, or variants of embodiments, the management unit of the energy management system further comprises a load controlling subunit, configured to release an actuation signal based on a received request signal to a set of actuators deployed at the site of the building.

A load controlling subunit is to be understood as any device or collection of devices able to release signals to a set of actuators, in order for them to perform an operation or mechanical function adapted to change the energetic configuration of the building according to the request signal. For instance, a set of actuators may comprise different mechanisms that activate air-conditioning valves, or electric roller shutters.

According to some of the embodiments, refinements, or variants of embodiments, the management unit of the energy management system is further configured to implement a default operation mode, which is defined by a set of predetermined values of power consumption and power generation of the building. These values can be taken from past records of the building energy management or be simply some prescribed values.

According to some of the embodiments, refinements, or variants of embodiments, the management unit of the energy management system is further adapted to set a minimum waiting time, during which the optimization unit does not send requests signals and the energy management system runs under the default operation mode.

The use of the demand-side flexibility can only be done for a limited period of time. A minimum waiting time before the flexibility can be used anew is therefore needed. This minimum waiting time can be set manually by a user through a user interface. The minimum waiting time can be set to a default value or be changed, for instance by filling a query command prompted by the management unit in the user interface. The minimum waiting time may also be automatically set by the system based on the time that it takes to bring the entire building back to default operation mode.

According to some of the embodiments, refinements, or variants of embodiments, the management unit of the energy management system is further adapted to set a maximum flexibility use time for the optimization unit to operate without interruption. This maximum flexibility use time limits the cyclic operation of the optimization unit. If the maximum flexibility use time is set to zero, the optimization unit is effectively switched off. This maximum flexibility use time, just like the minimum waiting time mentioned above, can be set by a user and modified anytime, e.g. through a query command prompted by the management unit in the user interface. Alternatively, the maximum flexibility use time may be automatically set by the system.

The request signals can therefore be distributed in cycles, which are constrained by a minimum waiting time and by a maximum flexibility use time, which can be both modified by a user or set automatically by the system.

According to some of the embodiments, refinements, or variants of embodiments, the management unit of the energy management system is further configured to switch to the default operation mode, when the maximum flexibility use time of operation of the optimization unit has expired. This automatic transition to the default operation mode has the advantage that the demand-side flexibility starts getting automatically regenerated right after the optimization unit of the energy management system has completed a cycle of operation.

According to some of the embodiments, refinements, or variants of embodiments, the optimization unit of the energy management system is adapted to implement an energy data model of the building and an optimization algorithm, wherein the data model is adapted to use forecasts of the power generation and forecasts of the power demand of the building as well as the acquired data as input.

The energy data model of the building takes into account the different energy resources of the building (energy storage assets and energy generation assets) as well as the power demand, which is evaluated for all the energy loads. The optimization proceeds by using the present power configuration of the building and projecting it onto the future on the basis of the forecasts, wherein the projections can be based e.g. on a past evolution of the power configuration of the building over time.

According to some of the embodiments, refinements, or variants of embodiments, the optimization algorithm is further configured to use as input information at least a weather forecast and/or an information about the power supplied by a power supply grid providing electrical energy to the building.

The weather forecast is an important input to predict a future performance of the renewable energy assets (e.g. solar panels and wind power units) of the respective building. An information about the power supplied by the grid can refer, e.g., to possible reductions of the supplied power, such as the ones implemented in some demand response programs. It may also indicate the supply-side flexibility coming from the grid.

According to some of the embodiments, refinements, or variants of embodiments, the optimization unit of the energy management system further comprises a database unit, which is configured to store a base load time series of the building, and wherein the optimization algorithm is further configured to retrieve the base load time series and use it as input.

The base load indicates the minimum level of power demand required to operate the building over 24 hours and forms a useful reference for load forecasting. The base load takes into account e.g. continuous loads like servers deployed at the site of the building or heating/cooling devices provided to keep a comfort temperature in the building. In other words, the base load of the building indicates the power consumption of all non-steerable loads at the site of the building. The base load time series is computed, e.g. by the optimization unit, by taking the measured base load time series and subtracting from it the used flexibility. Both the measured base load time series and the used flexibility are determined by the management unit. With this subtraction, the base load time series (without any flexibility action) can be derived.

According to some of the embodiments, refinements, or variants of embodiments, the management unit and/or the optimization unit of the energy management system are implemented in a server or as part of a cloud platform. In huge buildings, where the energy management is complex, it is advantageous to have the information as decentralized and as available as possible. Particularly in huge buildings, different individuals might be responsible for different aspects of the energy management and they should have simultaneous access to the information provided by the energy management system of the invention.

According to some of the embodiments, refinements, or variants of embodiments, the optimization unit of the energy management system is further configured to request the derived information about the flexibility of the power demand no more often than every 10 seconds, preferably every 5 seconds. The optimized power configuration can thereby be updated almost in real-time.

According to some of the embodiments, refinements, or variants of embodiments, the flexibility of the power demand is communicated to the optimization unit of the energy management system in an aggregated way, and the optimization unit is adapted to model the flexibility of the power demand as a virtual battery.

By communicating the demand-side flexibility as a total value that aggregates the demand-side flexibility of all loads in the building saves a lot of computational effort to the optimization unit. As a consequence, it is not necessary for the optimization unit to integrate information about all the individual demand-side assets. Instead, the demand-side flexibility of the building as a whole is modelled as a virtual power storage unit, with a capacity given by the demand-side flexibility integrated over the maximum time of use of the flexibility. This virtual battery, much as a real battery, can be charged and discharged, and it is easy to implement into the optimization algorithm.

Although here, in the foregoing and also in the following, some functions are described as being performed by units, it shall be understood that this does not necessarily mean that such units are provided as entities separate from one another. In cases where one or more units are provided as software, the units may be implemented by program code sections or program code snippets, which may be distinct from one another but which may also be interwoven or integrated into one another.

Similarly, in cases where one or more units are provided as hardware, the functions of one or more units may be provided by one and the same hardware component, or the functions of several units may be distributed over several hardware components, which need not necessarily correspond to the units. Thus, any device, system or method which exhibits all of the features and functions ascribed to a specific unit shall be understood to comprise, or implement, said unit. In particular, it is a possibility that all units are implemented by program code executed by the computing device, for example by a server or by a cloud computing platform.

The above embodiments and implementations can be combined with each other as desired, as far as this is reasonable.

Further scope of the applicability of the present method and system will become apparent from the following figures, detailed description and claims. However, it should be understood that the detailed description and specific examples, while indicating preferred embodiments of the invention, are given by way of illustration only, since various changes and modifications within the spirit and scope of the invention will become apparent to those skilled in the art.

Aspects of the present disclosure will be better understood with reference to the following figures.

In the figures:
Fig. 1 is a schematic depiction of an energy management system for a building according to an embodiment of the present invention;
Fig. 2 is a schematic representation of the flexibility of the power demand and the flexibility of the power generation;
Fig. 3 is a block diagram showing an exemplary embodiment of a computer-implemented energy management system method (M) according to the present invention;
Fig. 4 is an exemplary illustration of the basic principle of the present invention on a plot showing the evolution of the power consumption charge (PCC) of a building with time;
Fig. 5 shows a description of the features of the management unit and the optimization unit according to an embodiment of the present invention;
Fig. 6 shows a possible data point of the management unit in an end-user interface according to an embodiment of the present invention;
Fig. 7 is a table showing one exemplary illustration of the interaction between the management unit and the optimization unit upon the generation of a set of request signals according to an embodiment of the present invention;
Fig. 8 is a table showing another exemplary illustration of the interaction between the management unit and the optimization unit upon the generation of another set of request signals according to an embodiment of the present invention;
Fig. 9 is a schematic block diagram illustrating a computer program product according to an embodiment of the third aspect of the present invention; and
Fig. 10 is a schematic block diagram illustrating a non-transitory computer-readable data storage medium according to an embodiment of the fourth aspect of the present invention.

Parts in the different figures that correspond to the same elements have been tagged with the same reference numerals.

The components illustrated in the figures are not necessarily to scale, emphasis being placed instead upon clearly illustrating the principles of the present disclosure. Likewise, certain components can be shown in generalized or schematic form in the interest of clarity and conciseness. In some instances, well-known structures and devices are shown in block diagram form in order to avoid obscuring the concepts of the present invention.

The numeration of the steps in the methods are meant to ease their description. They do not necessarily imply a certain ordering of the steps. In particular, several steps may be performed concurrently.

The detailed description includes specific details for the purpose of providing a thorough understanding of the present invention. However, it will be apparent to those skilled in the art that the present invention may be practised without these specific details.

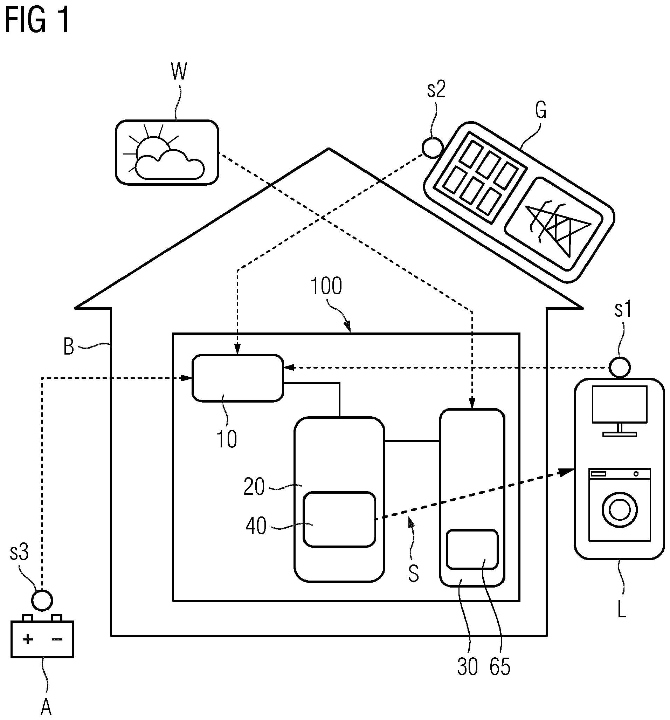

Fig. 1 shows a schematic illustration of an energy management system 100 for a building B according to an embodiment of the present invention. The system 100 comprises a monitoring unit 10, a management unit 20, and an optimization unit 30.

The monitoring unit 10 of the energy management system 100 is an information and communication technology device capable of acquiring data and delivering it for further processing. It is configured to acquire information about the power generated by power generation devices G, about the power consumed by the power consumption devices L (loads) and about the state of charge SoC of power storage devices A. This information is gathered from a set of sensors s1-s3 (e.g. temperature sensors) installed in the building B.

The management unit 20 of the energy management system 100 is an entity able to process information, in particular the information acquired by the monitoring unit 10. The management unit 20 is configured to derive information about a flexibility of the power demand (or demand-side flexibility) of the power consumption devices L deployed in the building B.

The optimization unit 30 of the energy management system 100 is an entity able to process information, which is configured to optimize the power allocation of the power produced by the power generation devices G to the power consumption devices L and/or to the power storage devices A. This power allocation depends on the demand-side flexibility available at the building B at any point in time.

In some embodiments, the optimization unit 30 is configured to implement an energy data model of the building together with an optimization algorithm. The algorithm incorporates a cost function, which is set to minimize a number of parameters (rather prominently CO2 production). The algorithm uses, among others, the information gathered by the monitoring unit 10, the base load of the building B, the demand-side flexibility, weather forecasts W, and information about the power supplied by the grid. An information about the power supplied by the grid can refer, e.g., to possible reductions of the power, such as the ones implemented in some demand response programs. It may also indicate the supply-side flexibility coming from the grid.

With all this information or data about the present status and future projection of the power consumption, power generation and state of charge SoC of the storage assets, the algorithm suggests a power configuration for the building B to match the solution that minimizes the cost function.

In some embodiments of the invention, the optimization unit 30 of the energy management system 100 further comprises a database unit 65, which is configured to store a historical time series of the base loads of the building B. In these embodiments, this information is also used by the algorithm in order to generate the optimal power configuration for the building B.

The optimal power configuration for the building B is communicated by the optimization unit 30 to the management unit 20 through request signals. In some embodiments, the management unit 20 is further configured to comprise a load controlling subunit 40, which is a device or a collection of devices configured to release an actuation signal S based on the request signal to a set of actuators (not shown in the figure) deployed in the building B. These actuators are devices or mechanisms able to perform mechanical work on the power consumption devices L and/or the power storage devices A. For instance, a set of actuators may be responsible for increasing the power of a heat pump, or activating electric roller shutters.

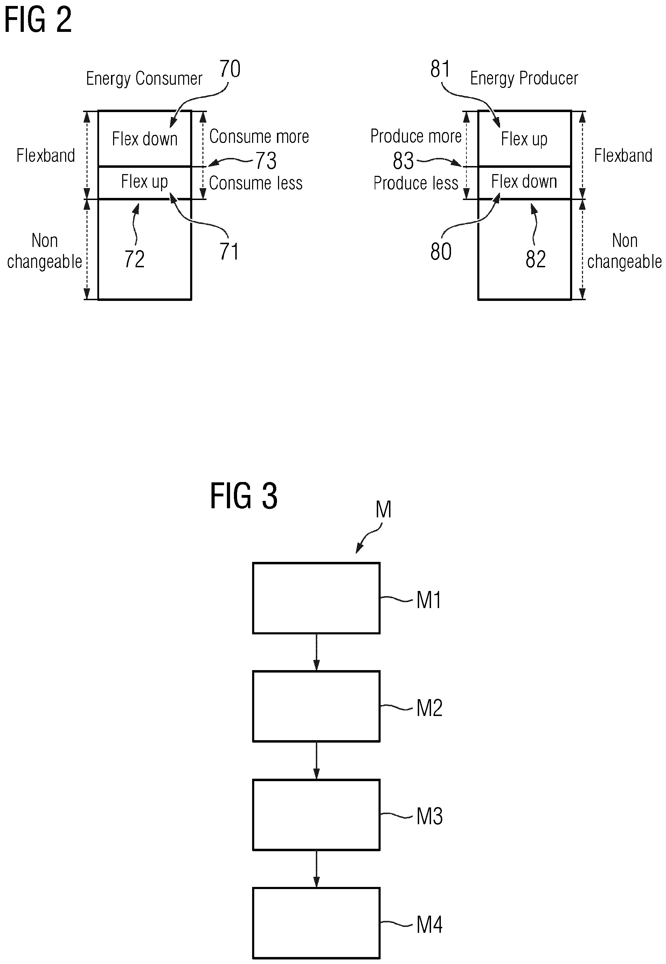

Fig. 2 shows a schematic representation of the flexibility of the power demand and the flexibility of the power generation. The horizontal bar 73 on the left panel shows the power consumption of an energy consumer, e.g. of a power consumption device L of the building B, at a moment in time. This quantity may be determined by a sensor and communicated to the monitoring unit 10.

The power band 71 shows an amount of power consumption that could be reduced by the power consumption device L. This amount is limited by the power band 72, which indicates the base load or continuous load of the power consumption device L. In other words, the power band 71 can be determined as the difference between the current power consumption 73 and the base load of the power consumption device L.

The power band 70 shows the possible power consumption increase of the power consumption device L. This can be determined by knowing the maximum power that the power consumption device L can consume. The aggregation of the power bands 70 and 71 defines the demand-side flexibility of the power consumption device L, which is derived by the management unit 20.

The horizontal bar 83 on the right panel shows the power produced by an energy producer, e.g. of a power generation device G at a moment in time. This quantity may be determined by a sensor and communicated to the monitoring unit 10.

The power band 80 shows by how much the power generation of the power generation device G could diminish. The power band 80 is limited by the power band 82, which indicates the minimum power production of the power generation device G. The power band 80 can therefore be determined as the difference between the measured current power production 83 and the minimal performance of the power generation device G.

The power band 81 shows the possible power generation increase of the power generation device G. This is determined by the difference between the current power generation and the maximum performance of the power generation device G. The aggregation of the power bands 80 and 81 defines the supply-side flexibility of the power generation device G.

Fig. 3 is a block diagram showing an exemplary embodiment of a computer-implemented energy management system method M according to the present invention, to be applied preferably with the energy management system 100 described in Fig. 1.

A first step M1 comprises acquiring information about the power generated by the power generation devices G, about the power consumed by the power consumption devices L and about the state of charge of the power storage devices A of a building B.

In a second step M2, the demand-side flexibility of the power consumption devices L deployed in the building B is derived, based on the information acquired in step M1.

In a further third step M3, the power allocation of the power produced by the power generation devices G is optimized, based on the demand-side flexibility of the building B. This optimization splits the power generation produced by the power generation devices G into a portion to be used, i.e consumed, by the power consumption devices L and another portion to be used, i.e. stored, by the power storage devices A.

In a further fourth step M4, an actuation signal S is released to a set of actuators in the building B, which can modify the power configuration of the building B according to the optimized power allocation.

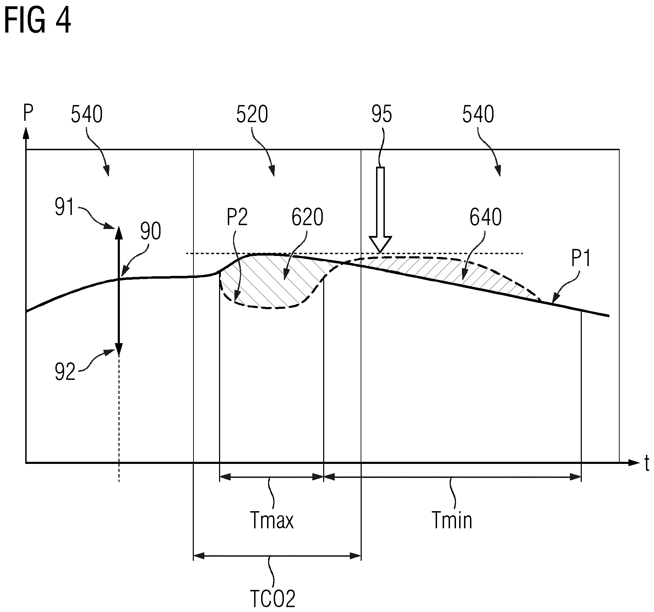

Fig. 4 is an exemplary illustration of the basic principle of the present invention on a plot showing the evolution of the power consumption charge (PCC) of the building B as a function of time.

The point 90 shows the PCC at a particular time, where the PCC can be acquired by the monitoring unit 10 of the energy management system 100. At that time, the demand-side flexibility is determined by the band stretching between a maximum flexibility 91 and a minimum flexibility 92. This power band is determined by the management unit 20 by aggregating the demand-side flexibility of the different power consumption devices L of the building B.

The region 540 corresponds to a time of low CO2 emission, which can be forecasted or simply measured. The region 520 corresponds instead to a time TCO2 during which the CO2 emission is high.

The curve P1 describes a possible profile for the power consumption of the building B when demand-side flexibility is not taken into account. This curve corresponds to a state-of-the-art solution. The dashed line 95 shows a power peak load. When the power consumption reaches the power peak load 95, a state-of-the-art energy management system is configured to reduce the power consumption of the building, e.g. by switching off some loads.

The curve P2 describes instead a possible energy configuration according to the present invention, where demand-side flexibility is taken into account. The curve P2 is the result of an optimized power allocation over time produced by the optimization unit 30 and implemented by the management unit 20 via the load controlling subunit 40.

Within the region 520, in which there are high levels of CO2 emission and the power consumption is approaching a peak load 95, the optimization unit 30 generates an optimized solution which involves the demand-side flexibility of the building B. Accordingly, the power consumption coming from the grid gets reduced, avoiding the peak load 95 without having to shut down some of the power consumption devices L of the building B.

The optimization unit 30 models the demand-side flexibility of the building B as a virtual battery. The region 620 shows the capacity of the virtual battery of the building B used during the time Tmax. The time Tmax corresponds to the maximum time of use of the demand-side flexibility without interruption in a discharge cycle of the virtual battery and it can be set by a user, e.g. as a field in an interface connected to the management unit 20. It can also be set automatically by the system 100.

When Tmax has expired, the management unit 20 of the energy management system automatically switches to a default operation mode, where the power consumption coming from the grid is increased (but stays below the peak load) and is partly used to recharge the virtual battery. This corresponds to the region 640, which indicates the capacity acquired by the virtual battery in the time region 540. In this time region 540 the levels of CO2 emissions are low. Therefore, the use of the demand-side flexibility optimizes the use of energy from the grid during times of high levels of CO2 emission.

The operation of the optimization unit 30 can be restarted after a minimum waiting time Tmin, which can be set by a user through an interface connected to the management unit 20 or set automatically by the system 100 based e.g. on the time required to bring the entire building B to the default operation mode. In Fig. 4, Tmin is actually longer than the time needed to recharge the virtual battery. After Tmin is over, the demand-side flexibility can be used again according to the optimized power allocations produced by the optimization unit 30.

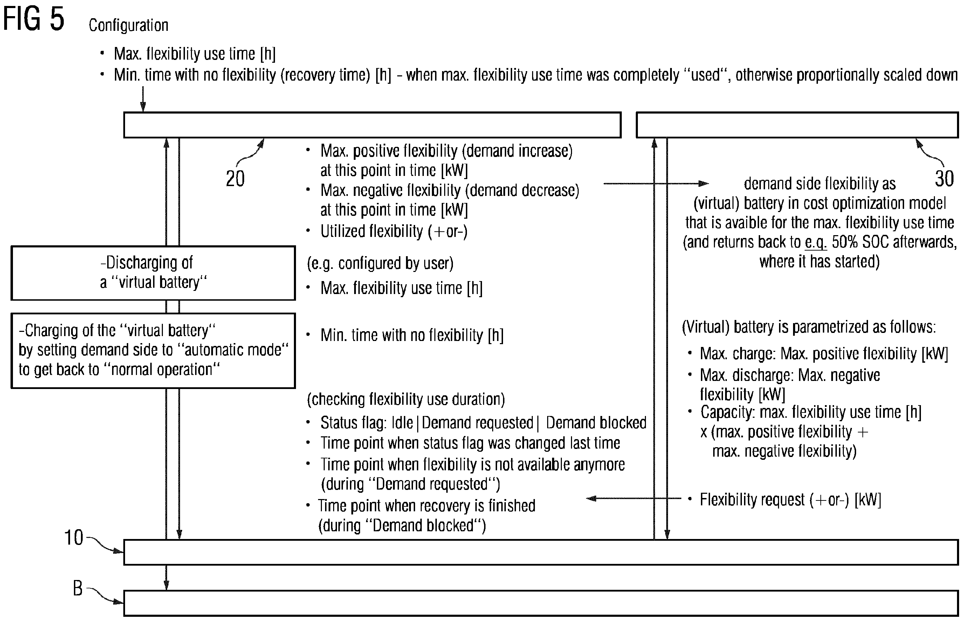

Fig. 5 shows a description of the features of the management unit 20 and the optimization unit 30 according to an embodiment of the present invention. The management unit 20 is configured to acquire information about the maximum and the minimum flexibility (see e.g. points 91 and 92 of Fig. 4). Together with the measured power consumption, the demand-side flexibility and the utilized flexibility can be determined. This information is transferred to the optimization unit 30, which models the demand-side flexibility as a virtual battery to be used to determine the optimized power allocation. The virtual battery has the maximum positive flexibility 91 as its maximum charge and the maximum negative flexibility 92 as its maximum discharge. The capacity is then the sum of the maximum positive flexibility 91 and the maximum negative flexibility 92 multiplied by the maximum flexibility use time Tmax. According to some embodiments of the invention, the optimization unit 30 is further configured to send periodic requests of the available flexibility to the management unit 20.

The management unit 20 is also configured to store information about a maximum flexibility use time (Tmax in Fig. 4), i.e. the maximum time the optimization unit 30 can operate without interruption, and a minimum waiting time (Tmin in Fig. 4), i.e. the minimum time where the demand-side flexibility is not used and the system 100 runs under the default operation mode (described also as automatic mode or normal operation in the figures).

The management unit 20 may also provide information about the status of the optimization unit 30, tagged as "idle", "demand requested" or "demand blocked". "Idle" indicates no activity of the optimization unit 30, "demand requested" indicates that the optimization unit 30 is sending a request signal based on an optimized power allocation, while "demand blocked" goes back to the default operation mode. The management unit can also show information about the time when the status was changed for the last time, the time left until the maximum flexibility use time Tmax expires (during periods of demand requests) and the time left until the optimization unit 30 can be used again (during "demand blocked" status).

The monitoring unit 10, the management unit 20 and the optimization unit 30 are interconnected with each other and can exchange signals. In order to modify the power configuration of the building B, the management unit 20, through e.g. the load controlling subunit 40, is adapted to send actuation signals S.

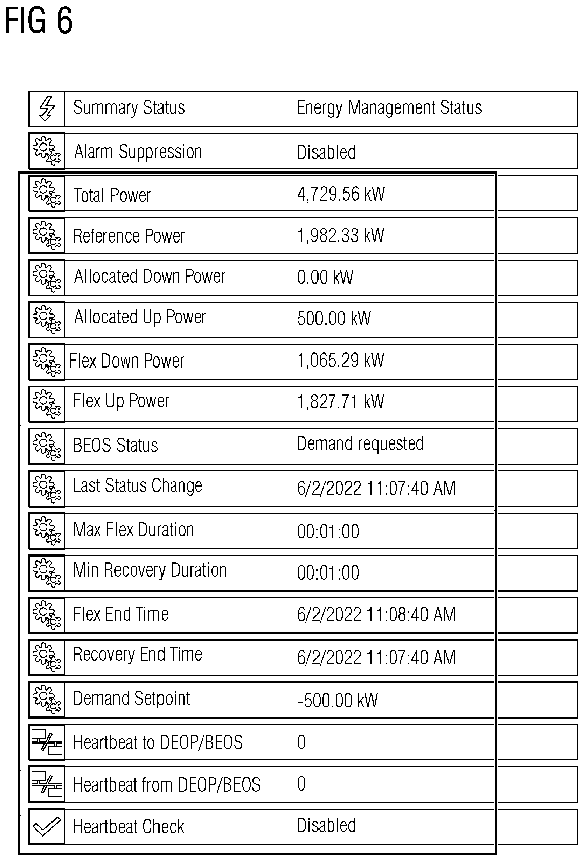

Fig. 6 shows a possible data point of the management unit 20 in an end-user interface according to an embodiment of the present invention. The different fields on the left-hand side correspond to the features described in Fig. 5. The total power is the power consumption charge, while the reference power is the power of those assets that can be used for flexibility. The allocated down and up power refer to the flexibility used by the system 100 (see e.g. the energy consumer drawing in Fig. 2). Both values are defined as positive. In the data point of Fig. 6 there is no allocated down power and 500 kW of allocated up power, which indicates a reduction of the consumption. Flex Down power and the Flex Up power correspond to the points 91 and 92 of Fig. 4, respectively. Their difference is the demand-side flexibility.

Fig. 6 shows a data point with a "demand request" status (noted as BEOS status). The status was changed for the last time at 11:07:40. Since the maximum flexibility use time Tmax and the minimum recovery time (or minimum waiting time Tmin) are set to 1 minute, the end of the operation time of the optimization unit 30 is at 11:08:40.

The demand request is summarized in the demand setpoint, which in this example is set at -500 kW. The heartbeat options allow to control the activity of the signal exchange between the management unit 20 and the optimization unit 30. In the example of Fig. 6, this option was disabled.

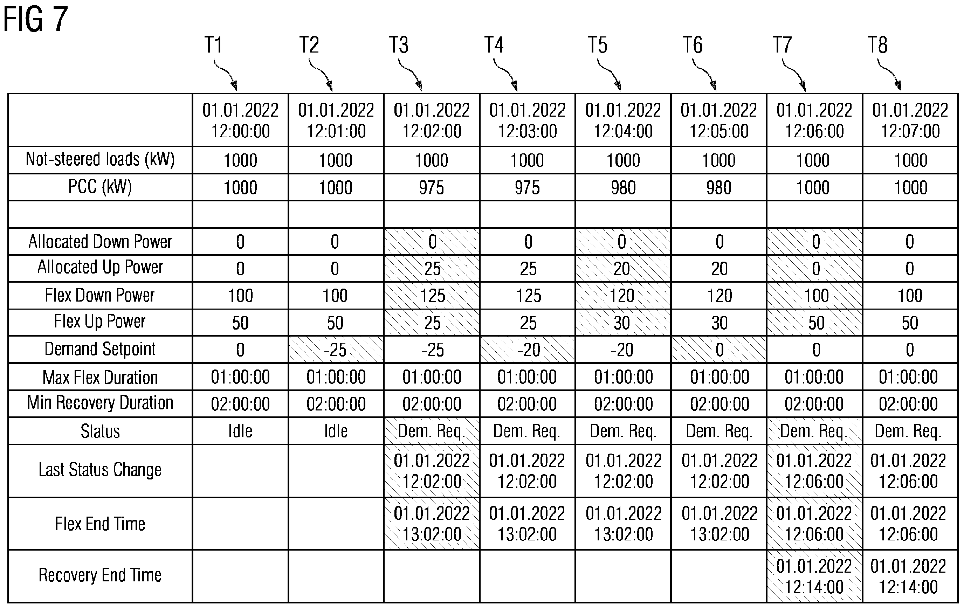

Fig. 7 is a table showing one exemplary illustration of the interaction between the management unit (20and the optimization unit 30 upon the generation of a set of request signals according to an embodiment of the present invention. The columns noted as T1-T8 show the power configuration of the system 100 at intervals separated by 1 minute. The maximum flexibility use time Tmax is set at 1 hour and the minimum waiting time Tmin (or minimum recovery time) at 2 hours. In this example, the optimization unit 30 sends a number of requests to decrease the power consumption charge (PCC) of the building.

At time T1, the system has a power consumption charge (PCC), e.g. from the grid, which is set at 1000 kW. The demand-side flexibility shows a Flex Down Power of 100 kW and a Flex Up Power of 50 kW. There are no allocated powers at this time and the status of the optimization unit 30 is idle.

At time T2, the optimization unit 30 sends a request signal to reduce the PCC by 25 kW.

At time T3, the status is changed to "demand request" and an (up) power of 25 kW is allocated. Correspondingly, the PCC decreases from 1000 kW to 975 kW, the Flex Down Power increases by 25 kW and the Flex Up Power decreases by 25 kW. The time T3 is noted as the time of the last change of status and the end of the flexibility time is set 1 hour later than T3.

At time T4, the optimization unit 30 sends a request signal to reduce the PCC by 20 kW.

This request signal is processed at time T5 by the management unit 20. Accordingly, the PCC is set at 980 kW, i.e. the 20 kW are not cumulative but refer to the initial configuration with a PCC of 1000 kW. A 20 kW (up) power is allocated and the Flex Down and Flex Up powers are set at 120 kW and 30 kW, respectively, to account for this change.

At time T6, there is a demand request to restore the initial power configuration present at T1.

At time T7, this demand is executed and the status changed to "request blocked". The flexibility end time is set to the time T7 and the recovery end time 8 minutes afterwards. At time T8, the power configuration is that of the system 100 at T7.

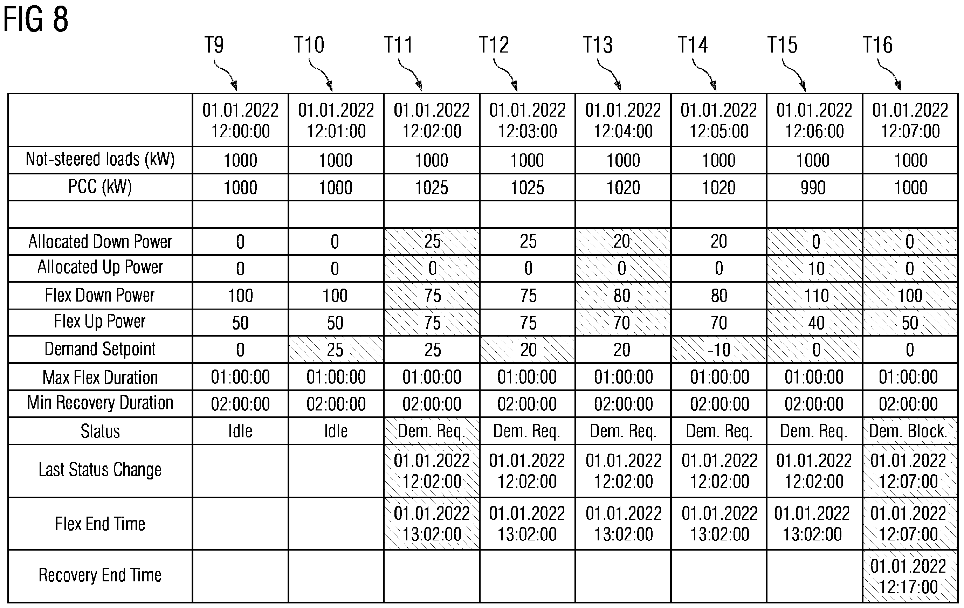

Fig. 8 is a table showing another exemplary illustration of the interaction between the management unit 20 and the optimization unit 30 upon the generation of another set of request signals according to an embodiment of the present invention. In this case, the optimization unit 30 requests to increase the PCC and then decrease it. Fig. 8 shows the power configuration of the system 100 at times T9-T16, taken at intervals of 1 minute. The maximum flexibility use time Tmax is set at 1 hour and the minimum waiting time Tmin (or minimum recovery time) at 2 hours. The rest of the initial (at time T9) power configurations are the same as in Fig. 7.

At time T10, the optimization unit 30 requests to increase the PCC by 25 kW. At time T11, the management unit 20 allocates the power change, namely the allocated (down) power is set to 25 kW, the Flex Down and Flex Up powers both to 75 kW, and the PCC is increased to 1025 kW. The flexibility end time is set at 1 hour after T11 and the status of the system 100 is set at "demand request".

At time T12, the optimization unit 30 requests to increase the PCC by 20 kW. At time T13, the management unit 20 allocates the power change, namely the allocated (down) power is set to 20 kW, the Flex Down and Flex Up powers to 80 kW and 70 kW, respectively, and the PCC is increased to 1020 kW. The status of the system 100 is kept at "demand request".

At time T14, the optimization unit 30 requests to decrease the PCC by 10 kW. At time T15, the management unit 20 allocates the power change, namely the allocated (up) power is set to 10 kW, the Flex Down and Flex Up powers to 110 kW and 40 kW, respectively, and the PCC is decreased to 990 kW. The status of the system 100 is kept at "demand request".

At time T15, there is also a demand request to restore the initial power configuration present at time T9. At time T16, the demand is executed and the status changed to "request blocked". The flexibility end time is set to the time T16 and the recovery end time 10 minutes afterwards.

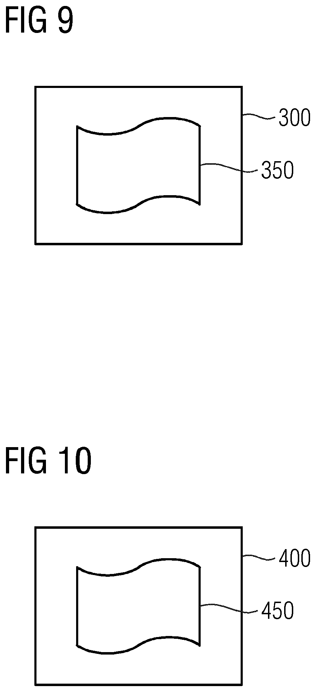

Fig. 9 shows a schematic block diagram illustrating a computer program product 300 according to an embodiment of the third aspect of the present invention. The computer program product 300 comprises executable program code 350 configured to, when executed, perform the method M according to any embodiment of the second aspect of the present invention, in particular as it has been described with respect to the preceding figures.

Fig. 10 shows a schematic block diagram illustrating a non-transitory computer-readable data storage medium 400 according to an embodiment of the fourth aspect of the present invention. The data storage medium 400 comprises executable program code 450 configured to, when executed, perform the method M according to any embodiment of the second aspect of the present invention, in particular as it has been described with respect to the preceding figures.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

The previous description of the disclosed embodiments are merely examples of possible implementations, which are provided to enable any person skilled in the art to make or use the present invention. Various variations and modifications of these embodiments will be readily apparent to those skilled in the art, and the generic principles defined herein may be applied to other embodiments without departing from the spirit or scope of the present disclosure. Thus, the present invention is not intended to be limited to the embodiments shown herein but it is to be accorded the widest scope consistent with the principles and novel features disclosed herein. Therefore, the present invention is not to be limited except in accordance with the following claims.

### List of Reference Signs

- 10: Monitoring unit
- 20: Management unit
- 30: Optimization unit
- 40: Load controlling subunit
- 65: Database unit
- 70-72: Power band
- 73: Power consumption
- 80-82: Power band
- 83: Power production
- 90: Power consumption
- 91: Maximum flexibility
- 92: Minimum flexibility
- 95: Power peak load
- 100: Energy management system
- 300: Computer program product
- 350: Executable program code
- 400: Non-transient computer-readable data storage medium
- 450: Executable program code
- 520: Time region of high CO2 emissions
- 540: Time region of low CO2 emissions
- 620: Capacity used by the virtual battery
- 640: Capacity acquired by the virtual battery
- A: Power storage devices
- B: Building
- G: Power generation devices
- L: Power consumption devices
- M: Energy management method
- M1-M4: Method steps
- P1-P2: Power consumption profiles
- S: Actuation signal
- s1-s3: Sensors
- TCO2: Time of high CO2 emissions
- Tmax: Maximum flexibility use time
- Tmin: Minimum waiting time
- T1-T16: Time points
- W: Weather forecast

## Claims

1. An energy management system (100) for a building (B) having power consumption devices (L), power generation devices (G) and power storage devices (A), said system (100) comprising:
a monitoring unit (10), which is configured to acquire information about the power generated by the power generation devices (G), about the power consumed by the power consumption devices (L) and about the state of charge of the power storage devices (A);
a management unit (20), which is configured to derive information about a flexibility of the power demand of the power consumption devices (L) deployed in the building (B) based on the information acquired by the monitoring unit (10); and
an optimization unit (30), which is configured to optimize the power allocation of the power produced by the power generation devices (G) to the power consumption devices (L) and/or to the power storage devices (A) depending on the derived flexibility information of the power demand.

2. The system (100) according to claim 1, wherein the optimization unit (30) is further configured to send request signals to the management unit (20), wherein the request signals are based on the optimized power allocation.

3. The system (100) according to claim 2, wherein the management unit (20) further comprises a load controlling subunit (40), configured to release an actuation signal (S) based on a received request signal to a set of actuators deployed at the site of the building (B).

4. The system (100) according to any of the previous claims, wherein the management unit (20) is further configured to implement a default operation mode, which is defined by a set of predetermined values of power consumption and power generation of the building (B).

5. The system (100) according to claims 1 to 4, wherein the management unit (20) is further adapted to set a minimum waiting time (Tmin), during which the optimization unit (30) does not send request signals and the energy management system (100) runs under the default operation mode.

6. The system (100) according to any of the previous claims, wherein the management unit (20) is further adapted to set a maximum flexibility use time (Tmax) for the optimization unit (30) to operate without interruption.

7. The system (100) according to claims 1 to 6, wherein the management unit (20) is further configured to switch to the default operation mode, when the maximum flexibility use time (Tmax) of operation of the optimization unit (30) has expired.

8. The system (100) according to any of the previous claims, wherein the optimization unit (30) is adapted to implement an energy data model of the building (B) and an optimization algorithm, wherein the data model is adapted to use forecasts of the power generation and forecasts of the power demand of the building (B) as well as the acquired data as input.

9. The system (100) according to claim 8, wherein the optimization algorithm is further configured to use as input information at least a weather forecast (W) and/or an information about the power supplied by a power supply grid providing electrical energy to the building.

10. The system (100) according to claim 8, wherein the optimization unit (30) further comprises a database unit (65), which is configured to store a base load time series of the building, and wherein the optimization algorithm is further configured to retrieve the base load time series and use it as input.

11. The system (100) according to any of the previous claims, wherein the management unit (20) and/or the optimization unit (30) are implemented in a server or as part of a cloud platform.

12. The system (100) according to any of the previous claims, wherein the optimization unit (30) is further configured to request the derived information about the flexibility of the power demand no more often than every 10 seconds, preferably every 5 seconds.

13. The system (100) according to any of the previous claims, wherein the flexibility of the power demand is communicated to the optimization unit (30) in an aggregated way, and wherein the optimization unit (30) is adapted to model the flexibility of the power demand as a virtual battery.

14. A computer-implemented energy management method (M) for a building (B), preferably to be implemented with the energy management system (100) according to claims 1 to 13, comprising the following steps:
acquiring (M1) information about the power generated by the power generation devices (G), about the power consumed by the power consumption devices (L) and about the state of charge of the power storage devices (A);
deriving (M2), based on the acquired information, information about a flexibility of the power demand of the power consumption devices (L) deployed in the building; and
optimizing (M3) the power allocation of the power produced by the power generation devices (G) to the power consumption devices (L) and/or to the power storage devices (A) depending on the derived flexibility information of the power demand.

15. A computer program product (300) comprising executable program code (350), which is configured, when executed, to perform the computer-implemented method (M) according to claim 14.

16. A non-transient computer-readable data storage medium (400) comprising executable program code (450), which is configured, when executed, to perform the computer-implemented method (M) according to claim 14.
